# FASCICULE DE BREVET EUROPEEN

(11) **EP 3 293 419 B1**
(45) Date de publication et mention de la délivrance du brevet: **27.05.2020**
(21) Numéro de dépôt: 17177489.6
(22) Date de dépôt: 22.06.2017
(51) Int. Cl.: F16H 48/38, F16H 55/17

(54) **COURONNE DE DIFFERENTIEL DE TRANSMISSION POUR VEHICULE ET DIFFERENTIEL DE TRANSMISSION**
TELLERRAD EINES DIFFERENTIALGETRIEBES FÜR FAHRZEUG, UND ENTSPRECHENDES DIFFERENTIALGETRIEBE
RING FOR VEHICLE TRANSMISSION DIFFERENTIAL AND TRANSMISSION DIFFERENTIAL

(30) Priorité: 09.09.2016 FR 1658385
(43) Date de publication de la demande: 14.03.2018
(73) Titulaire: RENAULT s.a.s., 92100 Boulogne-Billancourt (FR)
(72) Inventeur: LALOS, Cédric, 78920 Ecquevilly (FR); RICHAUD, Xavier, 92800 Puteaux (FR)

(56) Documents cités:
- WO-A1-2014/019743
- DE-A1-102007 040 479
- DE-B3-102008 063 013
- US-A1- 2005 137 047

## Description

L'invention se situe dans le domaine des différentiels de transmission pour véhicules automobiles.

Plus précisément, elle a pour objet un boîtier de différentiel comprenant une couronne de différentiel, la couronne comprenant une jante intermédiaire circulaire entre un anneau extérieur dans lequel est réalisée sa denture d'entraînement, et un anneau intérieur assurant le centrage de la couronne sur le boîtier du différentiel.

Elle a également pour objet un différentiel pour transmission de véhicule, comportant ce boîtier de différentiel.

Dans une transmission de véhicule automobile, le couple du moteur est généralement transmis à l'arbre primaire de la boîte de vitesses, puis à l'arbre secondaire, par un engrenage de pignons pour la vitesse engagée. En sortie de boîte, le couple est transmis au différentiel par un autre engrenage, dit engrenage de « *pont* », composé du pignon d'attaque du différentiel porté par l'arbre secondaire, et de la couronne du différentiel.

Le couple moteur génère une déformation de l'ensemble des pièces de la boîte de vitesses. Ces déformations ont une incidence sur la qualité d'engrènement des engrenages, et réduisent la durée de vie de leurs dentures. Le défaut de qualité d'engrènement, a essentiellement pour origine, une mise en biais des dentures.

Pour être contenue à un niveau acceptable, la mise en biais du « *pont* » suppose que les carters de boîte soient suffisamment rigides. Pour limiter la flexion des arbres et la mise en biais du pont qui en résulte, on peut augmenter le diamètre des arbres, ou réduire leur longueur, en modifiant l'architecture de boîte.

Par la publication WO 2014/019 743, on connaît une couronne de différentiel présentant des ouvertures d'allégement.

La présente invention vise à réduire la mise en biais des dentures sur les couronnes de différentiel, sans remettre en cause l'architecture de la boîte de vitesses ou du différentiel.

Dans ce but, la jante intermédiaire de la couronne présente des zones d'allégement, destinées à lui conférer une plus grande souplesse dans ces zones, que sur le reste de sa circonférence.

Dans un mode de réalisation, l'épaisseur de la couronne évolue progressivement sur sa circonférence entre des parties plus étroites d'allégement et des parties plus épaisses.

Les zones d'allégement sont disposées en face de zones les plus raides du boîtier du différentiel.

L'invention sera mieux comprise à la lecture de la description suivante d'un mode de réalisation non limitatif de celle-ci, en se reportant aux dessins annexés, sur lesquels :
- la figure 1 est un modèle, illustrant la déformation d'une boîte de vitesses,
- la figure 2 montre la mise en biais d'une denture d'entraînement de différentiel,
- la figure 3 est un exemple de différentiel à couronne soudée,
- la figure 4 montre les ouvertures d'un boîtier de différentiel,
- la figure 5 montre l'indexage d'une couronne de différentiel, et la figure 6 l'évolution de sa mise en biais selon cet indexage, sur une demi-rotation du différentiel,
- la figure 7 est une vue de face de la couronne proposée,
- la figure 8 une vue en perspective de celle-ci,
- les figures 8A et 8B sont deux coupes de la même couronne, dans sa partie la plus épaisse, et dans sa partie la plus mince, et
- la figure 9 met en évidence la diminution de la mise en biais dans ce mode de réalisation, sur une demi-rotation du différentiel.

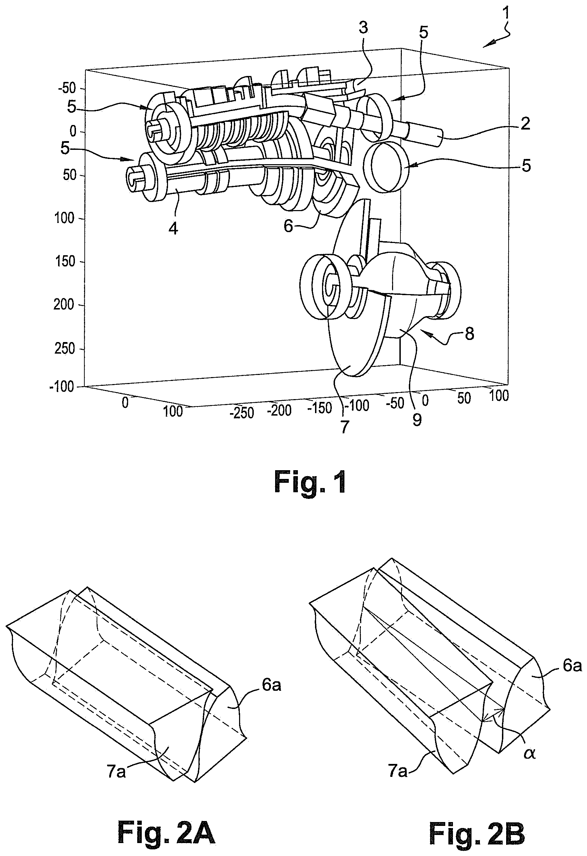

Sur la figure 1, on voit les déformations (exagérées de façon volontaire) subies par l'ensemble des pièces d'une boîte de vitesses 1 sous l'effet du couple transmis par le moteur (non représenté). Sont représentés l'arbre primaire 2, l'axe de marche arrière 3, l'arbre secondaire 4 et le boîtier 9 du différentiel 8. L'emplacement des logements des paliers d'arbres 5, sur les carters, est également indiqué. La mise en flexion de l'arbre primaire 3, de l'arbre secondaire 4 et du différentiel 8, se traduit par un basculement du pignon d'attaque 6 ainsi que de la couronne de différentiel 7. Ces déformations entraînent la mise en biais (angle α sur la figure 2B) des dentures 6a du pignon d'attaque 6 et des dentures 7a de la couronne 7.

Lorsque la couronne 7 du différentiel est fixée sur le boîtier 9 par des vis, celles-ci traversent toujours la couronne, dans sa partie centrale la plus étroite, constituant une jante plane. La jante doit offrir aux vis une longueur de vissage suffisante dans leur épaisseur, pour qu'elles conservent une certaine élasticité vis-à-vis du boîtier où elles sont engagées.

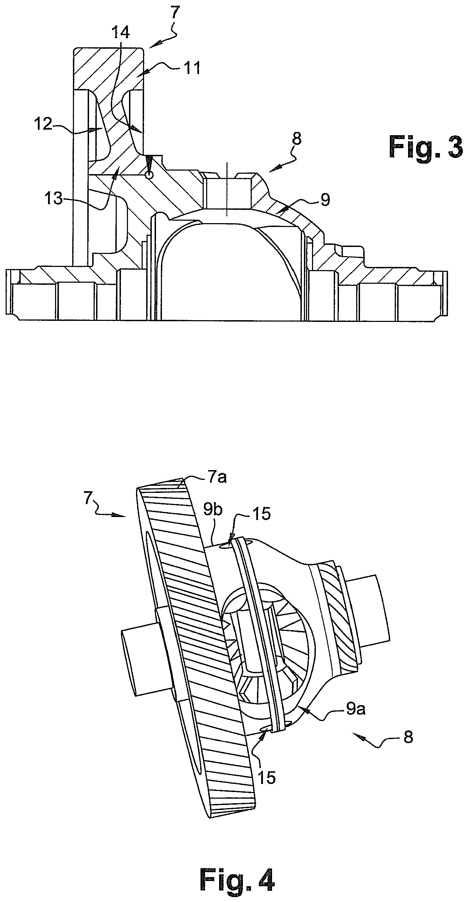

Sur la figure 3, on voit un boîtier de différentiel 9, sa couronne d'entraînement 7, et leur liaison soudée 14. On distingue les trois parties principales de la couronne 7 : l'anneau extérieur 11, la jante intermédiaire 12, et l'anneau intérieur 13 soudé par son bord latéral sur le boîtier 9. La soudure 14 ne porte pas sur la jante 12, mais sur l'anneau intérieur 13. Ainsi, la jante 12 ne participe pas de manière directe à la liaison, comme dans le cas d'une liaison vissée.

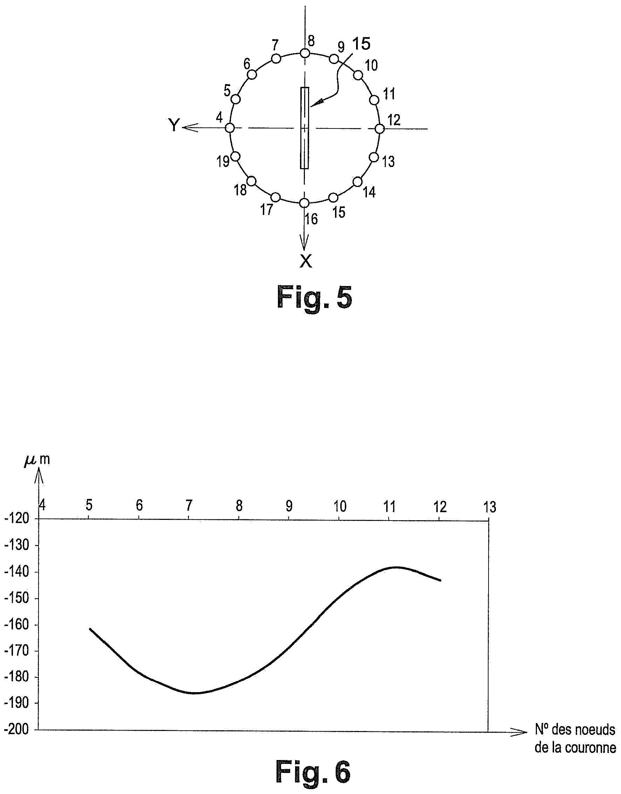

Le différentiel 8 représenté sur la figure 4, n'est pas homogène, du point de vue de sa raideur, sur un tour de boîtier. En effet, le boîtier 9 présente deux parties plus souples, correspondant à deux ouvertures 9a, et deux parties plus raides 9b, où sont engagées les extrémités 15 de l'axe de satellites. La figure 5 reproduit des calculs de mise en biais sur la circonférence de sa couronne de pont, au couple maximum en première. La mise en biais est mesurée en microns (µm), à l'emplacement des « nœuds » numérotés de 4 à 19 sur la figure 6. Ces calculs montrent que la raideur est maximum dans les zones les plus raides 9b du boîtier, et que la mise en biais est plus faible dans les parties souples 9a, autour des ouvertures.

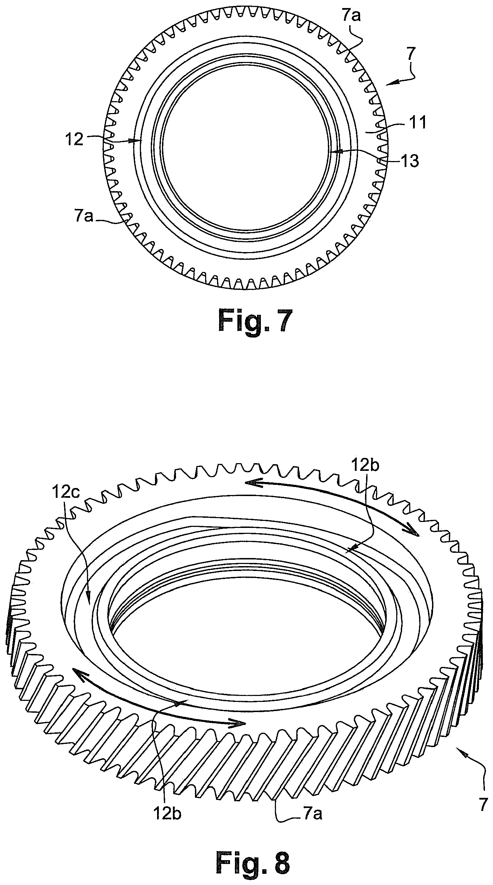

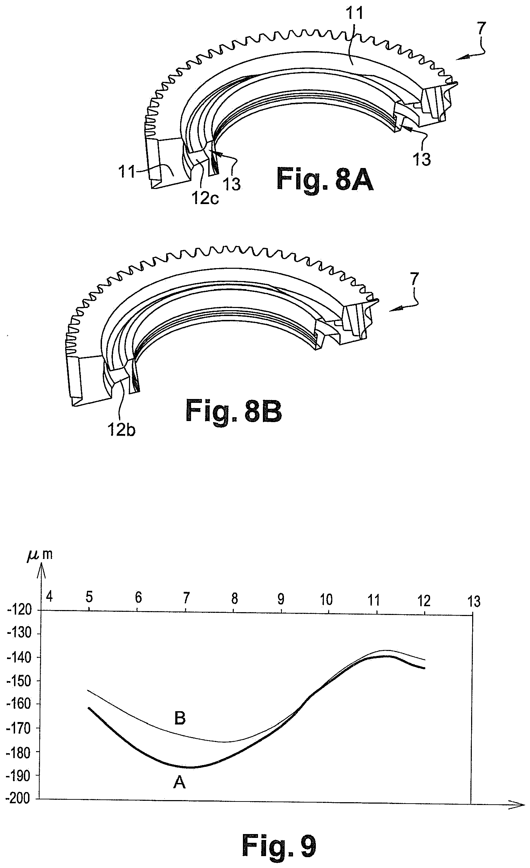

La vue de face de la figure 7 montre les trois parties 11, 12, 13 d'une couronne 7 conforme à l'invention. La couronne 7 de différentiel 8 comprend une jante intermédiaire circulaire 12 entre un anneau 11 extérieur dans lequel est réalisée sa denture d'entraînement 7a et un anneau intérieur 13. La couronne 7 est centrée sur le boîtier 9, par son anneau intérieur 13. L'épaisseur de la jante 12 évolue sur sa circonférence entre des zones d'allégement plus minces 12b et des parties plus épaisses 12c mises en évidence sur la vue en perspective de la figure 8, où l'on voit le nouveau dessin de la jante 12, à épaisseur variable. L'épaisseur évolutive de la jante 12, permet d'assouplir le différentiel en face des parties raides 9b du boitier. L'épaisseur de la jante 12 évolue progressivement sur sa circonférence, entre les secteurs les plus étroits 12b et les secteurs les plus épais 12c. Afin de conserver une jante suffisamment robuste, son épaisseur reste inchangée (par rapport aux couronnes connues) en face des ouvertures 9a. En revanche elle est plus étroite mince dans les parties de la couronne faisant face aux parties les plus raides 9b du boîtier. Les coupes des figures 8A et 8B mettent en évidence la variation d'épaisseur de la jante, qui peut passer par exemple de 8mm (épaisseur standard conservée en face des parties les plus souples) à 5 mm dans les parties les plus raides 9b.

La figure 9, permet de comparer la mise en biais d'une couronne classique (courbe A) et de la couronne proposée (courbe B). La mise en biais maximum du pont à couple maximum en première, diminue d'environ 13 microns grâce à l'invention, entre les nœuds 6 et 8, ce qui représente un gain total de 7% autour du nœud n° 7.

Le différentiel 8 proposé comporte une couronne 7 conforme à la description ci-dessus, dont les zones d'allégement 12b sont disposées en face des parties les plus raides 9b de son boîtier. La couronne 7 est de préférence soudée sur le boîtier.

En conclusion, l'invention est applicable sur tous les différentiels avec liaison boitier/couronne soudée. Sa mise en œuvre nécessite un indexage de la couronne de pont (tel que celui de la figure 5), afin de positionner angulairement ses zones souples en face des parties raides du boitier. Ses avantages principaux sont les suivants :
- une amélioration de la denture de pont via la réduction de la mise en biais tout en conservant la robustesse de la couronne,
- sa transparence vis-à-vis de l'architecture de la couronne, du boîtier et de leur fixation, et
- un allégement de la couronne.

## Revendications

1. Un boîtier (9) de différentiel (8) comprenant une couronne (7) de différentiel (8), la couronne (7) de différentiel (8) comprenant une jante intermédiaire circulaire (12) entre un anneau (11) extérieur dans lequel est réalisée sa denture d'entraînement (7a) et un anneau intérieur (13) assurant le centrage de la couronne (7) sur le boîtier (9) de différentiel (8), la jante intermédiaire (12) présentant des zones d'allégement (12b), destinées à conférer à la couronne (7) une plus grande souplesse dans ces dernières, que sur le reste de sa circonférence, **caractérisée en ce que** l'épaisseur de la jante (12) évolue progressivement sur sa circonférence entre des zones allégement (12b) plus minces et des parties plus épaisses (12c).

2. Le boîtier (9) de différentiel (8) selon la revendication 1, **caractérisée en ce que** les zones d'allégement (12b) de la jante (12) sont positionnées au montage sur les parties les plus raides (9b) du boîtier (9) de différentiel (8) .

3. Le boîtier (9) de différentiel (8) selon la revendication 1 ou 2, **caractérisée en ce que** l'épaisseur de la jante (12) évolue de plusieurs microns entre ses zones plus minces (12b) et ses zones plus épaisses (12a).

4. Le boîtier (9) de différentiel (8) selon la revendication 1, 2 ou 3, **caractérisée en ce que** l'épaisseur de la jante évolue de d'environ une dizaine microns entre ses zones plus étroites (12b) et ses zones plus épaisses (12a).

5. Différentiel (8) pour transmission de véhicule, comportant le boîtier (9) de différentiel (8) conforme à l'une des revendications 2 à 4, **caractérisé en ce que** les zones d'allégement (12b) de la couronne (7) sont disposées en face des parties les plus raides (9b) du boîtier (9) de différentiel (8).

6. Différentiel (8) selon la revendication 5, **caractérisé en ce que** la couronne (7) est soudée sur son boîtier (9) de différentiel (8).

## Patentansprüche

1. Gehäuse (9) eines Differentials (8), umfassend ein Tellerrad (7) des Differentials (8), wobei das Tellerrad (7) des Differentials (8) einen kreisförmigen Zwischenkranz (12) zwischen einem äußeren Ring (11), in dem seine Antriebsverzahnung (7a) ausgebildet ist, und einem inneren Ring (13), der das Zentrieren des Tellerrads (7) auf dem Gehäuse (9) des Differentials (8) gewährleistet, umfasst, wobei der Zwischenkranz (12) Reliefzonen (12b) aufweist, die dazu bestimmt sind, dem Tellerrad (7) einen höheren Grad an Flexibilität in diesen letzteren zu verleihen als in dem Rest seines Umfangs, **dadurch gekennzeichnet, dass** sich die Dicke des Kranzes (12) über seinen Umfang zwischen dünneren Reliefzonen (12b) und dickeren Teilen (12c) allmählich verändert.

2. Gehäuse (9) des Differentials (8) nach Anspruch 1, **dadurch gekennzeichnet, dass** die Reliefzonen (12b) des Kranzes (12) bei der Montage auf die starrsten Teile (9b) des Gehäuses (9) des Differentials (8) positioniert werden.

3. Gehäuse (9) des Differentials (8) nach Anspruch 1 oder 2, **dadurch gekennzeichnet, dass** sich die Dicke des Kranzes (12) zwischen seinen dünneren Zonen (12b) und seinen dickeren Zonen (12a) um mehrere Mikrometer verändert.

4. Gehäuse (9) des Differentials (8) nach Anspruch 1, 2 oder 3, **dadurch gekennzeichnet, dass** sich die Dicke des Kranzes zwischen seinen schmaleren Zonen (12b) und seinen dickeren Zonen (12a) um etwa 10 Mikrometer verändert.

5. Differential (8) für ein Fahrzeuggetriebe, das das Gehäuse (9) des Differentials (8) nach einem der Ansprüche 2 bis 4 aufweist, **dadurch gekennzeichnet, dass** die Reliefzonen (12b) des Tellerrads (7) gegenüber den starrsten Teilen (9b) des Gehäuses (9) des Differentials (8) angeordnet sind.

6. Differential (8) nach Anspruch 5, **dadurch gekennzeichnet, dass** das Tellerrad (7) an sein Gehäuse (9) des Differentials (8) geschweißt ist.

## Claims

1. Housing (9) of a differential (8) comprising a ring gear (7) of the differential (8), the ring gear (7) of the differential (8) comprising a circular intermediate rim (12) between an outer ring (11), in which its drive toothing (7a) is formed, and an inner ring (13) ensuring the centring of the ring gear (7) on the housing (9) of the differential (8), the intermediate rim (12) having lightening regions (12b) intended to impart to the ring gear (7) a greater degree of flexibility in said regions than over the remainder of its circumference, **characterized in that** the thickness of the rim (12) varies progressively over its circumference between thinner lightening regions (12b) and thicker portions (12c).

2. Housing (9) of the differential (8) according to Claim 1, **characterized in that** the lightening regions (12b) of the rim (12) are positioned, upon mounting, on the stiffest portions (9b) of the housing (9) of the differential (8).

3. Housing (9) of the differential (8) according to Claim 1 or 2, **characterized in that** the thickness of the rim (12) varies by several microns between its thinner regions (12b) and its thicker regions (12a).

4. Housing (9) of the differential (8) according to Claim 1, 2 or 3, **characterized in that** the thickness of the rim varies by approximately 10 microns between its narrower regions (12b) and its thicker regions (12a).

5. Differential (8) for a vehicle transmission, comprising the housing (9) of the differential (8) according to one of Claims 2 to 4, **characterized in that** the lightening regions (12b) of the ring gear (7) are arranged facing the stiffest portions (9b) of the housing (9) of the differential (8).

6. Differential (8) according to Claim 5, **characterized in that** the ring gear (7) is welded to its housing (9) of the differential (8).
